# EUROPEAN PATENT APPLICATION

(11) **EP 4 276 212 A1**
(43) Date of publication of application: **15.11.2023**
(21) Application number: 22762550.6
(22) Date of filing: 02.03.2022
(51) Int. Cl.: C22C 38/02, C22C 38/00, C21D 8/02

(54) **COLD FORGED GEAR STEEL AND MANUFACTURING METHOD THEREFOR**

(30) Priority: 03.03.2021 CN 202110235935
(71) Applicant: BAOSHAN IRON & STEEL CO., LTD., Shanghai 201900 (CN)
(72) Inventor: ZHANG, Jun, Shanghai 201900 (CN); ZHAO, Sixin, Shanghai 201900 (CN); GAO, Jiaqiang, Shanghai 201900 (CN); WANG, Wei, Shanghai 201900 (CN)
(74) Representative: Nederlandsch Octrooibureau
(86) International application number: PCT/CN2022/078754
(87) International publication number: WO 2022/184087

(57) **Abstract**

Disclosed is a cold forged gear steel. In addition to Fe and inevitable impurities, the cold forged gear steel further comprises the following chemical elements in mass percentage: 0.15-0.17% of C, 0.10-0.20% of Si, 1.0-1.10% of Mn, 0.80-0.90% of Cr and 0.02-0.04% of Al. Correspondingly, further disclosed is a manufacturing method for the cold forged gear steel, comprising the steps of: (1) smelting and casting; (2) heating; (3) forging or rolling; and (4) spheroidizing annealing: heating to and keeping at 750-770 °C, then cooling with a cooling rate of 5-15 °C/h to and keeping at 700-720 °C, cooling with a cooling rate of 3-12 °C/h to and keeping at 660-680 °C, and cooling with a cooling rate of 5-20 °C/h to 500 °C or below, and then tapping and cooling.

## Description

### TECHNICAL FIELD

The present invention relates to a steel and a manufacturing method therefor, in particular to a cold forged gear steel and a manufacturing method therefor.

### BACKGROUND

A gear is a key part of an automobile gearbox. In recent years, with the rapid development of the automobile industry, in the face of a wider automobile market, the demand for automobile gearbox remains high for a long time.

Due to the unique shape of gears and high requirements for dimensional accuracy, many companies use a process of finishing machining after hot forging processing to produce gears. However, use of this method to produce the gears not only has a low utilization rate of materials, but also requires high energy consumption in the hot forging process, which will greatly increase the processing cost and cause environmental pollution.

Accordingly, some parts processing enterprises adopt the cold forging technique to produce gears, and cold forging processing of parts generally has the following advantages: (1) the dimensional and positional accuracy of a near-net shaped body is high, which can provide an ideal blank for subsequent high-efficiency and high-precision machining; (2) for near-net shaped parts, many parts do not need to be subsequently processed, greatly reducing the waste of raw materials; (3) the productivity is high, the energy consumption is low, the manufacturing cost can be effectively reduced, the manufacturing cycle can be shortened, the competitiveness of products can be improved, and the performance and quality of precision-formed products can be greatly improved compared with traditional cutting products; (4) compared with the conventional forming process, the cold forging technique of the parts has improved the production conditions and greatly reduced the pollution to the environment; and (5) in terms of cold precision forming, the cold forging technique of the parts has greatly reduced energy consumption and pollution due to reduction of heat treatment processes and advancement of a flash-free process. Therefore, it can be seen that the cold forging technique is more in line with the trend of clean manufacturing and green environmental protection in the future, and can create advantageous conditions for sustainable development.

However, the cold forging technique has high requirements for the plasticity of a material; since the shape of the gear is complicated and cold forging processing requires excellent plasticity of the material, there is often a problem that cracking or microcrack initiation occurs during extrusion due to insufficient plasticity of steel when the gear is manufactured by the cold forging technique. This problem results in an increase in the scrap rate of processed parts and an increase in the cost of subsequent inspection.

In addition, hardenability has always been one of the key requirement indicators of gear steel. The size of a hardenability bandwidth greatly affects heat treatment deformation. The narrower the hardenability bandwidth, the smaller the discrete range, the more beneficial it is to gear machining and improve its meshing accuracy. Currently, the Chinese national standard GB/T 5216-2014 "Structural steels with specified hardenability bands" requires a hardenability bandwidth of 10 HRC or more; although the automotive industry has stricter requirements for the hardenability bandwidth than the national standard, it is only limited to a bandwidth of 7 HRC or less. With the increasing demands of the automotive industry for precision machining and assembly dimensional tolerances of automotive gears, reducing the hardenability bandwidth of gear steel has become a hot research topic of gear steel at home and abroad in recent years, and in particular, some cold forged gear steels with high precision requirements have more stringent requirements for hardenability.

Based on this, the present invention intends to provide a cold forged gear steel which not only has excellent plasticity and cold processing characteristics, but also has a narrow hardenability bandwidth, such that the cold forged gear steel can be effectively applied to cold forged gears, has wide applicability, and has good popularization prospects and application values.

### SUMMARY OF INVENTION

One of the objects of the present invention is to provide a cold forged gear steel. The cold forged gear steel adopts a reasonable chemical composition design, and not only has suitable strengths, but also has excellent plasticity and cold forging properties. At the same time, the cold forged gear steel has a narrow hardenability bandwidth, and its hardenability at each position (i.e., J1.5, J3, J5, J7 and J9) has a bandwidth within 4 HRC, and the cold forged gear steel can effectively meet the demands, has wide applicability, and has good popularization prospects and application values.

It should be noted that J1.5 represents the hardness at 1.5 mm from the end of the gear steel, J3 represents the hardness at 3 mm from the end of the gear steel, J5 represents the hardness at 5 mm from the end of the gear steel, J7 represents the hardness at 7 mm from the end of the gear steel, and J9 represents the hardness at 9 mm from the end of the gear steel.

In order to achieve the above object, the present invention provides a cold forged gear steel, further comprising, in addition to Fe and inevitable impurities, the following chemical elements in mass percentage:
0.15-0.17% of C, 0.10-0.20% of Si, 1.0-1.10% of Mn, 0.80-0.90% of Cr and 0.02-0.04% of Al.

In one preferred embodiment, the cold forged gear steel according to the present invention consists of the following chemical elements in mass percentage:
0.15-0.17% of C, 0.10-0.20% of Si, 1.0-1.10% of Mn, 0.80-0.90% of Cr and 0.02-0.04% of Al; the balance being Fe and inevitable impurities.

In the cold forged gear steel according to the present invention, a design principle of each chemical element is specifically as follows:
C: in the cold forged gear steel according to the present invention, the addition of an appropriate amount of C element can ensure that the steel has good hardenability and appropriate strength, which is beneficial for improving the wear resistance of final parts processed from the steel. However, it should be noted that the content of the C element in the steel should not be too high, since the increase in the content of the C element in the steel will increase the hardness of the steel, which will lead to a material strength being too high during the subsequent processing, increases the loss of a die during cold forging, and causes an increase in downstream processing costs. When the content of the C element in the steel is too low, it cannot be guaranteed that the steel will achieve a high tensile strength, resulting in a low structural strength of a core of a gear, a decrease of the anti-deformation ability of the gear, and a decrease of the fatigue life of the gear. Therefore, C is a key element affecting hardenability, and in order to achieve a narrow hardenability of the gear steel, in the cold forged gear steel according to the present invention, the content by mass of the C element is controlled to be 0.15-0.17%.
Si: in the cold forged gear steel according to the present invention, the Si element is a ferrite forming element, has a strong solid solution strengthening effect and can effectively increase the strength of the steel. In addition, the Si element can also reduce the diffusion ability of C in ferrite, and therefore the addition of an appropriate amount of Si element to the steel can avoid the formation of coarse carbides and their precipitation at defects during spheroidizing annealing. However, it should be noted that the content of the Si element in the steel should not be too high, and when the content of the Si element in the steel is too high, the plasticity of the steel will be reduced. Therefore, in the cold forged gear steel according to the present invention, the content by mass of the Si element is controlled to be 0.10-0.20%.
Mn: in the cold forged gear steel according to the present invention, the Mn element easily forms plastic MnS with the S element in the steel, thereby enhancing the chip breaking effect and improving the cutting performance in the subsequent gear finishing process. However, it should be noted that a content of the Mn element being too high in the steel will also lead to an increase in strength and hardness of the steel, which will exacerbate the loss of a die during subsequent cold forging. Therefore, in order to improve the easy cutting properties of the steel while avoiding the strength of the steel being too high, and in order to reduce the fluctuation of hardenability, the content by mass of the Mn element, as a core element affecting hardenability of the gear steel, is controlled to be 1.0-1.10% in the cold forged gear steel according to the present invention.
Cr: in the cold forged gear steel according to the present invention, the addition of the Cr element to the steel will inhibit the diffusion-type phase transformation of the steel, which is not conducive to the diffusion nucleation during spheroidizing. If the content of the Cr element in the steel is too high, coarse carbides will be formed, deteriorating cold deformation properties. In addition, Cr can influence hardenability of the gear steel to a large extent, and in order to reduce the fluctuation range of hardenability of the gear steel, in the cold forged gear steel according to the present invention, the content by mass of the Cr element is controlled to be 0.80-0.90%.
Al: in the cold forged gear steel according to the present invention, the Al element can form fine AlN precipitates during the steel making process, which can inhibit the growth of austenite grains during the subsequent cooling process, thereby effectively refining the austenite grains, and achieving the purpose of improving the toughness of the steel at a low temperature. However, it should be noted that the content of the Al element in the steel should not be too high, a content of the Al element in the steel being too high will result in the formation of large Al oxides, which results in the formation of large-sized B-type inclusions, and coarse aluminum oxide hard inclusions will deteriorate the fatigue resistance of the steel, and also causes the phenomenon of chipping during machining. Based on this, in order to make the Al element exert its beneficial effects, in the cold forged gear steel according to the present invention, the content by mass of the Al element is controlled to be 0.02-0.04%.

Preferably, in the cold forged gear steel according to the present invention, among the inevitable impurities, the content of impurity elements satisfies at least one of: P≤0.015%, S≤0.003%, N≤0.012% and O≤0.003%, preferably O≤0.002% and B≤0.0002%.

In the above technical solution, P, S, N, O and B are all impurity elements in the steel, and in order to obtain steel with better performance and better quality, the content of the impurity elements in the steel should be reduced as much as possible if the technical conditions allow.

The impurity element P can be bonded to Fe to form a hard and brittle Fe₃P phase, such that: the steel has cold brittleness during cold processing, resulting in deterioration of the plasticity of the steel; along-grain fracture occurs when the steel is subjected to an impact load, forming a large cleavage plane; and the P element in the steel will segregate at a grain boundary, lowering the bonding energy of the grain boundary, and deteriorating the plasticity of the steel. Therefore, in order to avoid that the brittleness of the steel becomes high, in the present invention, the content by mass of the P element is controlled to be P≤0.015%.

The impurity element S is easily bonded to Fe to form a FeS phase with a melting point of 989 °C, which will cause hot brittleness of the steel during hot working. Therefore, in order to avoid hot brittleness of the steel, in the present invention, the content by mass of S is controlled to be S≤0.003%.

Although the impurity element N can form AlN or TiN in the steel, and can play a role in refining austenite grains, the increase of the content of the N element in the steel will lead to the increase of its enrichment at defects and at the same time will form coarse nitride precipitated particles, affecting the fatigue life of the steel. Therefore, in the present invention, it is necessary to control the content by mass of the N element to be N≤0.012%.

The impurity element O can form compounds such as Al₂O₃ and TiO with Al and Ti elements in the steel, and therefore, in order to guarantee the structure uniformity of the steel, in the cold forged gear steel according to the present invention, the content by mass of O is controlled to be O≤0.003% and preferably the content by mass of O is controlled to be O≤0.002%.

The impurity element B has a great influence on the hardenability of a material, the B element will segregate at an austenite grain boundary, and a new phase is difficult to nucleate at the austenite grain boundary when austenite is decomposed, thereby causing the inoculation period of the austenite decomposition to be prolonged, thereby reducing the rate of diffusive phase transformation, facilitating martensite transformation, and thus increasing the hardenability of the steel. However, the position of B segregation is not fixed, resulting in a large fluctuation in the hardenability of the material. Therefore, in the present invention, in order to ensure the hardenability of the gear steel, the content by mass of B is controlled to be B≤0.0002%.

Preferably, the cold forged gear steel according to the present invention further comprises at least one of the following chemical elements: 0<Ca≤0.005% and 0<Ti≤0.008%.

In the above technical solution, the Ca and Ti elements mentioned above can further improve the properties of the cold forged gear steel according to the present invention, and a design principle of the Ca and Ti elements is as follows:
Ca: in the cold forged gear steel according to the present invention, CaS can be formed by adding an appropriate amount of Ca element to the steel, thereby improving the size and morphology of inclusions and improving the impact toughness of the steel. However, it should be noted that the content of the Ca element in the steel should not be too high. Therefore, in the present invention, the content by mass of the Ca element may be controlled to be 0<Ca≤0.005%.
Ti: in the cold forged gear steel according to the present invention, the Ti element can form corresponding compounds with the C element and the N element in the steel, wherein the formation temperature of TiN is 1400 °C or above and TiN is usually precipitated in a liquid phase or delta ferrite, thereby achieving the purpose of refining austenite grains. However, it should be noted that if the content of the Ti element in the steel is too high, coarse TiN precipitates will be formed, which will lead to a decrease in the fatigue resistance of the steel. Based on this, in the present invention, the content by mass of the Ti element may be controlled to be 0<Ti≤0.008%.

It should be noted that the addition of the above elements will increase the cost of the material, and in view of the performance and cost control in combination, at least one of the above elements may be preferably added in the technical solution of the present invention.

Preferably, the cold forged gear steel according to the present invention has a microstructure of ferrite+spheroidal carbide.

Preferably, the cold forged gear steel according to the present invention has mechanical properties satisfying: a yield strength of 180-220 MPa, a tensile strength of 380-430 MPa, an elongation of 37% or more and a section shrinkage of 68% or more; and/or the cold forged gear steel has a hardenability satisfying: J1.5: 38-42 HRC, J3: 35-39 HRC, J5: 30-34 HRC, J7: 26-30 HRC and J9: 21-25 HRC, and the above hardenability each has a bandwidth of 4 HRC or less.

Correspondingly, another object of the present invention is to provide a manufacturing method for the above cold forged gear steel. The manufacturing method is simple for production, and the cold forged gear steel manufactured by the manufacturing method not only has excellent plasticity and cold processing characteristics, but also meets requirements for the gear steel having a narrow hardenability, which has good popularization prospects and application values.

In order to achieve the above object, the present invention provides a manufacturing method for the above cold forged gear steel, comprising the steps of:
(1) smelting and casting;
(2) heating;
(3) forging or rolling; and
(4) spheroidizing annealing: heating to and keeping at 750-770 °C, then cooling with a cooling rate of 5-15 °C/h to and keeping at 700-720 °C, cooling with a cooling rate of 3-12 °C/h to and keeping at 660-680 °C, and cooling with a cooling rate of 5-20 °C/h to 500 °C or below, and then tapping (i.e., discharging from the furnace) and cooling.

In the manufacturing method for the cold forged gear steel according to the present invention, by controlling the process conditions, especially heat treatment process parameters, a forged or rolled rod is controlled and then a spheroidizing annealing process is adopted, such that the cold forged gear steel manufactured by the manufacturing method according to the present invention can obtain a matrix structure of ferrite+spheroidal carbide, with a large amount of ferrite in the matrix, thereby effectively ensuring that the cold forged gear steel of the present invention has good plasticity, eliminating the internal stress of the steel, and obtaining good structure uniformity.

It needs to be noted that in the step (1) of the manufacturing method of the present invention, in the smelting process, electric furnace or converter smelting may be employed; and in the casting process, die casting or continuous casting may be employed.

Accordingly, in the step (3), a forging or rolling process may be employed. If the forging process is used, it can be directly forged to a final size of round steel. If the rolling process is used, a steel slab may also be directly rolled to a final specification. In some embodiments, during the rolling process, the steel slab may be rolled to a specified intermediate slab size, and then the intermediate slab is heated and rolled to obtain a final finished product size.

Preferably, in the manufacturing method of the present invention, in the step (2), the heating temperature is controlled to be 1080-1200 °C.

In the above technical solution, in the step (2), steel can be controlled to be heated at a heating temperature of 1080-1200 °C to be austenitized. The elements in the steel are uniformly diffused to reduce segregation of the material, such that the structure uniformity of the round steel is good and the hardenability fluctuation is small during the subsequent forging or rolling and cooling.

Preferably, in the manufacturing method of the present invention, in the step (3), the final rolling or final forging temperature is controlled to be 860-980 °C.

Preferably, in the manufacturing method of the present invention, in the step (4), it is heated to 750-770 °C and kept for 4h or above, then cooled with a cooling rate of 5-15 °C/h to 700-720 °C and kept for 3.5h or above, cooled with a cooling rate of 3-12 °C/h to 660-680 °C and kept for 3.5h or above, and cooled with a cooling rate of 5-20 °C/h to 500 °C or below, and then tapped (i.e., discharged from the furnace) and cooled.

The cold forged gear steel and the manufacturing method therefor according to the present invention have the following advantages and beneficial effects compared with the prior art:
the cold forged gear steel according to the present invention can form a uniform matrix structure of ferrite+spheroidal carbide through a reasonable chemical composition design by making full use of the influence of various alloying elements on phase transformation and microstructure in combination with a specific heat treatment process. In addition, the present invention also effectively controls the content of impurities such as P, N and O in the steel, and ensures that the obtained cold forged gear steel has suitable strength as well as excellent plasticity and elongation while having a narrow hardenability bandwidth and the like.

In the present invention, the cold forged gear steel of the present invention not only has suitable strength, but also has excellent plasticity and cold forging properties, and the cold forged gear steel has mechanical properties satisfying: the yield strength of 180-220 MPa, the tensile strength of 380-430 MPa, the elongation of 37% or more and the section shrinkage of 68% or more. Meanwhile, the cold forged gear steel also has a narrow hardenability bandwidth, the cold forged gear steel has a hardenability satisfying: J1.5: 38-42 HRC, J3: 35-39 HRC, J5: 30-34 HRC, J7: 26-30 HRC and J9: 21-25 HRC, and the above hardenability each has a bandwidth of 4 HRC or less.

In addition, it should be noted that the cold forged gear steel according to the present invention is reasonable in chemical composition and process design, has a loose process window, can realize mass commercial production on a rod production line, has very wide applicability, and has good popularization prospects and application values.

### BRIEF DESCRIPTION OF THE DRAWINGS

FIG. 1 is a photograph of a microstructure of the cold forged gear steel in Example 4 under an optical microscope.
FIG. 2 is an image photograph of the cold forged gear steel in Example 4 under a scanning electron microscope (SEM).

### DETAILED DESCRIPTION

The cold forged gear steel and the manufacturing method therefor according to the present invention will be further explained and described below with reference to the drawings and the specific examples, but the explanation and description do not constitute an improper limitation of the technical solution of the present invention.

### Examples 1-9

The cold forged gear steels in Examples 1-9 were all manufactured by using the steps of:
(1) In accordance with the chemical composition shown in Table 1, smelting and casting: wherein the smelting was performed by using an electric furnace or a converter, and the casting process adopted die casting or continuous casting.
(2) Heating: wherein the heating temperature was controlled to be 1080-1200 °C.
(3) Forging or rolling: wherein the final rolling or final forging temperature was controlled to be 860-980 °C.
(4) Spheroidizing annealing: heating to and keeping at 750-770 °C, then cooling with a cooling rate of 5-15 °C/h to and keeping at 700-720 °C, cooling with a cooling rate of 3-12 °C/h to and keeping at 660-680 °C, and cooling with a cooling rate of 5-20 °C/h to 500 °C or below, and then tapping and cooling.

The cold forged gear steels in Examples 1-9 of the present invention were manufactured by using the above steps, and their chemical composition and related process parameters met the control requirements of the design specifications of the present invention.

It should be noted that in the forging or rolling process of the above step (3), a forging or rolling process may be employed. If the forging process was used, it could be directly forged to a final size of round steel. If the rolling process was used, a steel slab may also be directly rolled to a final specification. In some embodiments, during the rolling process, the steel slab may be rolled to a specified intermediate slab size, and then the intermediate slab was heated and rolled to obtain a final finished product size.

In the Examples 1-9, all the Examples except for Example 6 adopted the rolling process for rolling the steel slab in the step (3), and the final rolling temperature was controlled to be 860-980 °C during the rolling process; the steel slab was first rolled into an intermediate slab having a size specification of 215*215 mm, then the intermediate slab was reheated, and after the intermediate slab was discharged from a heating furnace, the intermediate slab was rerolled into a final finished round steel having a specification of ϕ25-45 mm.

Accordingly, in the present invention, Example 6 adopted the forging process in the operation of the above step (3), and in Example 6, it was directly forged to a finished round steel having a specification of ϕ25-45 mm by controlling the final forging temperature to be 860-980 °C.

Table 1 lists the chemical element composition in mass percentage of the cold forged gear steels in Examples 1-9.

**Table 1 (the balance being Fe and other inevitable impurities besides P, S, N, O and B)**

| No. | Chemical elements | | | | | | | | | | | |
|---|---|---|---|---|---|---|---|---|---|---|---|---|
| | C (wt%) | Si (wt%) | Mn (wt%) | P (wt%) | S (wt%) | Cr (wt%) | Al (wt%) | Ti (wt%) | Ca (wt%) | N (wt%) | O (wt%) | B (wt%) |
| Example 1 | 0.151 | 0.15 | 1.08 | 0.015 | 0.002 | 0.85 | 0.021 | 0.005 | 0.005 | 0.0118 | 0.0030 | 0.00012 |
| Example 2 | 0.159 | 0.18 | 1.05 | 0.011 | 0.003 | 0.88 | 0.033 | 0.006 | 0.003 | 0.0094 | 0.0013 | 0.00016 |
| Example 3 | 0.168 | 0.11 | 1.01 | 0.009 | 0.0015 | 0.82 | 0.025 | 0.002 | 0.002 | 0.0045 | 0.0022 | 0.00007 |
| Example 4 | 0.150 | 0.17 | 1.09 | 0.007 | 0.0012 | 0.84 | 0.036 | 0.0015 | 0.003 | 0.0017 | 0.0025 | 0.00009 |
| Example 5 | 0.161 | 0.14 | 1.06 | 0.006 | 0.001 | 0.81 | 0.02 | 0.003 | 0.002 | 0.0050 | 0.0012 | 0.00019 |
| Example 6 | 0.169 | 0.10 | 1.02 | 0.005 | 0.0021 | 0.85 | 0.04 | 0.006 | 0.004 | 0.0066 | 0.0016 | 0.00013 |
| Example 7 | 0.152 | 0.19 | 1.08 | 0.008 | 0.0019 | 0.88 | 0.028 | 0.008 | 0.003 | 0.0113 | 0.0019 | 0.00011 |
| Example 8 | 0.162 | 0.16 | 1.07 | 0.007 | 0.0011 | 0.89 | 0.038 | 0.005 | 0.002 | 0.0076 | 0.0011 | 0.00017 |
| Example 9 | 0.170 | 0.13 | 1.06 | 0.012 | 0.0027 | 0.87 | 0.029 | 0.007 | 0.004 | 0.0096 | 0.0017 | 0.00010 |

Tables 2-1 and 2-2 list specific process parameters for the cold forged gear steels in Examples 1-9 in the above process steps.

**Table 2-1**

| No. | Final finished round steel diameter (mm) | Step (2) | Step (3) | | |
|---|---|---|---|---|---|
| | | Heating temperature (°C) | Intermediate slab final rolling temperature (°C) | Intermediate slab heating temperature (°C) | Final rolling or final forging temperature (°C) |
| Example 1 | 25 | 1080 | 860 | 1100 | 870 |
| Example 2 | 35 | 1103 | 880 | 1130 | 890 |
| Example 3 | 45 | 1150 | 920 | 1160 | 921 |
| Example 4 | 25 | 1200 | 950 | 1200 | 950 |
| Example 5 | 35 | 1120 | 900 | 1140 | 900 |
| Example 6 | 45 | 1180 | / | / | 930 |
| Example 7 | 25 | 1140 | 912 | 1165 | 980 |
| Example 8 | 35 | 1096 | 871 | 1095 | 860 |
| Example 9 | 45 | 1165 | 980 | 1152 | 914 |

**Table 2-2**

| No. | Step (4) | | | | | | | | | |
|---|---|---|---|---|---|---|---|---|---|---|
| | Heating temperature (°C) | Heating keeping time (h) | Primary cooling rate (°C/h) | Primary cooling temperature (°C) | Primary cooling keeping time (h) | Secondary cooling rate (°C/h) | Secondary cooling temperature (°C) | Secondary cooling keeping time (h) | Tertiary cooling rate (°C/h) | Tertiary cooling temperature (°C) |
| Example 1 | 750 | 7 | 5 | 705 | 7 | 12 | 660 | 7 | 20 | 490 |
| Example 2 | 760 | 6 | 10 | 700 | 7 | 10 | 665 | 5 | 15 | 430 |
| Example 3 | 755 | 7 | 15 | 700 | 6.5 | 6 | 665 | 6 | 10 | 400 |
| Example 4 | 750 | 8 | 6 | 705 | 6 | 4 | 670 | 8 | 5 | 450 |
| Example 5 | 765 | 5 | 12 | 700 | 5 | 8 | 680 | 4 | 10 | 480 |
| Example 6 | 770 | 4 | 8 | 710 | 4 | 3 | 660 | 3.5 | 10 | 440 |
| Example 7 | 755 | 6 | 5 | 720 | 3.5 | 9 | 675 | 6 | 15 | 470 |
| Example 8 | 765 | 5 | 9 | 715 | 4 | 5 | 670 | 7 | 10 | 430 |
| Example 9 | 760 | 6.5 | 10 | 710 | 4 | 10 | 670 | 8 | 5 | 460 |

The obtained cold forged gear steels in Examples 1-9 were sampled and subjected to various related performance tests, and the obtained performance test results are listed in Table 3, respectively.

The cold forged gear steels in Examples 1-9 were tested in accordance with GB/T 228.1-2010 "Metallic materials - Tensile testing - Part 1: Method of test at room temperature" to determine the yield strength, tensile strength, elongation and section shrinkage of the steels in the Examples.

Table 3 lists the mechanical performance test results of the cold forged gear steels in Examples 1-9.

**Table 3**

| No. | Yield strength (MPa) | Tensile strength (MPa) | Elongation (%) | Section shrinkage (%) |
|---|---|---|---|---|
| Example 1 | 187 | 382 | 41 | 72 |
| Example 2 | 193 | 403 | 40 | 70 |
| Example 3 | 215 | 423 | 38 | 68.5 |
| Example 4 | 185 | 391 | 37 | 68 |
| Example 5 | 197 | 411 | 37.5 | 68 |
| Example 6 | 217 | 413 | 38.5 | 69 |
| Example 7 | 182 | 391 | 40 | 70.5 |
| Example 8 | 205 | 412 | 42 | 73 |
| Example 9 | 218 | 426 | 39 | 69 |

Correspondingly, after the mechanical performance tests were completed, the cold forged gear steels in Examples 1-9 were sampled and subjected to a hardenability test, and the obtained performance test results are listed in Table 4.

The cold forged gear steels in Examples 1-9 were tested in accordance with GB/T 225-2006 "Steel - Hardenability test by end quenching" to determine the hardenability of the steels in the Examples.

Table 4 lists the hardenability test results of the cold forged gear steels in Examples 1-9.

**Table 4**

| No. | J1.5 / HRC | J3 / HRC | J5 / HRC | J7 / HRC | J9 / HRC |
|---|---|---|---|---|---|
| Example 1 | 39.8 | 37.1 | 31.7 | 28.1 | 22.6 |
| Example 2 | 40.6 | 37.6 | 32.2 | 28.3 | 23.1 |
| Example 3 | 41.3 | 38.4 | 32.5 | 29 | 24.1 |
| Example 4 | 39.4 | 36.8 | 31.2 | 28.3 | 23.6 |
| Example 5 | 40 | 37.3 | 30.7 | 27.5 | 22.5 |
| Example 6 | 41.6 | 38.2 | 31.5 | 29.5 | 24.6 |
| Example 7 | 39.6 | 37 | 31.2 | 28.6 | 23.4 |
| Example 8 | 40.7 | 37.5 | 30.4 | 27.4 | 22.3 |
| Example 9 | 41.6 | 38.6 | 32.1 | 29.4 | 24.7 |

| | | | | | |
|---|---|---|---|---|---|
| Note: in the above table, regarding the expression of the hardenability of the steel, J1.5 represents the hardness at 1.5 mm from the end, J3 represents the hardness at 3 mm from the end, J5 represents the hardness at 5 mm from the end, J7 represents the hardness at 7 mm from the end, and J9 represents the hardness at 9 mm from the end. | | | | | |

As can be seen from Table 3, in the present invention, the cold forged gear steels in Examples 1-9 exhibited very excellent mechanical properties, and the cold forged gear steels in Examples 1-9 all exhibited a yield strength of 182-218 MPa, a tensile strength of 382-426 MPa, an elongation of 37% or more and a section shrinkage of 68% or more. The mechanical properties of the cold forged gear steels in Examples were excellent, and the steels exhibited good plasticity and section shrinkage at a low temperature, and exhibited excellent cold processing characteristics.

Accordingly, as can be seen from Table 4, the hardenability of the cold forged gear steels in Examples 1-9 satisfied J1.5: 39.4-41.6 HRC, J3: 36.8-38.6 HRC, J5: 30.4-32.5 HRC, J7: 27.4-29.5 HRC and J9: 22.3-24.7 HRC, and the hardenability bandwidth at each location was 4 HRC or less.

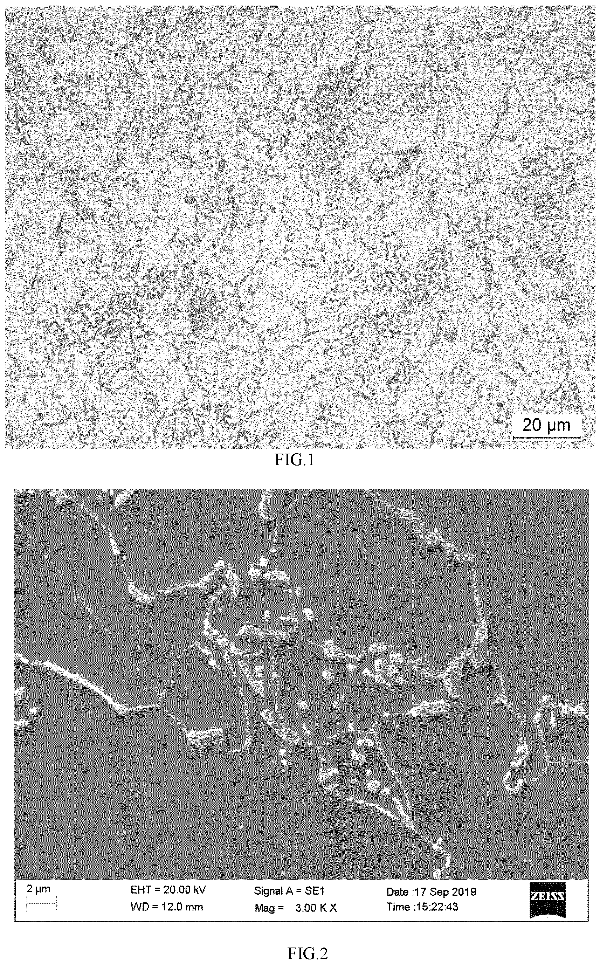

FIG. 1 is a photograph of a microstructure of the cold forged gear steel in Example 4 under an optical microscope.

FIG. 2 is an image photograph of the cold forged gear steel in Example 4 under a scanning electron microscope (SEM).

As can be seen in conjunction with FIGS. 1 and 2, the cold forged gear steel in Example 4 of the present invention had a microstructure of ferrite+spheroidal carbide.

In summary, it can be seen that the present invention has developed a cold forged gear steel with a narrow hardenability bandwidth through a reasonable chemical composition design combined with an optimized process, and the cold forged gear steel not only has better strength, but also has excellent plasticity and elongation, can be effectively applied to cold forging processed gears, has very wide applicability, and has good popularization prospects and application values.

In addition, the cold forged gear steel according to the present invention is reasonable in chemical composition and process design, has a loose process window, and can realize mass commercial production on a rod production line.

It should be noted that the cold forged gear steel according to the present invention is reasonable in chemical composition and process design, has a loose process window, can realize mass commercial production on a rod, and has good popularization prospects and application values.

In addition, the combinations of the technical features in the present invention are not limited to the combinations described in the claims of the present invention or the combinations described in the specific Examples, and all technical features described in the present invention can be freely combined or integrated in any way unless there is a conflict between the technical features.

It should also be noted that only specific Examples of the present invention have been illustrated above, and obviously, the present invention is not limited to the above Examples, and there are many similar variations therewith. All variations directly derived from or conceived by those skilled in the art from the contents disclosed in the present invention are intended to fall within the protection scope of the present invention.

## Claims

1. A cold forged gear steel, wherein in addition to Fe and inevitable impurities, the cold forged gear steel further comprises the following chemical elements in mass percentage:
0.15-0.17% of C, 0.10-0.20% of Si, 1.0-1.10% of Mn, 0.80-0.90% of Cr and 0.02-0.04% of Al.

2. The cold forged gear steel as claimed in claim 1, wherein the cold forged gear steel consists of the following chemical elements in mass percentage:
0.15-0.17% of C, 0.10-0.20% of Si, 1.0-1.10% of Mn, 0.80-0.90% of Cr and 0.02-0.04% of Al; the balance being Fe and inevitable impurities.

3. The cold forged gear steel as claimed in claim 1 or 2, wherein among the inevitable impurities, the content of impurity elements satisfies at least one of: P≤0.015%, S≤0.003%, N≤0.012% and O≤0.003%, preferably O≤0.002% and B≤0.0002%.

4. The cold forged gear steel as claimed in claim 1, wherein the cold forged gear steel further comprises at least one of the following chemical elements: 0<Ca≤0.005% and 0<Ti≤0.008%.

5. The cold forged gear steel as claimed in claim 1 or 2, wherein the cold forged gear steel has a microstructure of ferrite+spheroidal carbide.

6. The cold forged gear steel as claimed in claim 1 or 2, wherein the cold forged gear steel has mechanical properties satisfying: a yield strength of 180-220 MPa, a tensile strength of 380-430 MPa, an elongation of 37% or more and a section shrinkage of 68% or more; and/or wherein the cold forged gear steel has a hardenability satisfying: J1.5: 38-42 HRC, J3: 35-39 HRC, J5: 30-34 HRC, J7: 26-30 HRC and J9: 21-25 HRC, and the above hardenability each has a bandwidth of 4 HRC or less.

7. A manufacturing method for the cold forged gear steel as claimed in any one of claims 1-6, comprising the steps of:
(1) smelting and casting;
(2) heating;
(3) forging or rolling; and
(4) spheroidizing annealing: heating to and keeping at 750-770 °C, then cooling with a cooling rate of 5-15 °C/h to and keeping at 700-720 °C, cooling with a cooling rate of 3-12 °C/h to and keeping at 660-680 °C, and cooling with a cooling rate of 5-20 °C/h to 500 °C or below, and then tapping and cooling.

8. The manufacturing method as claimed in claim 7, wherein in the step (2), controlling a heating temperature to be 1080-1200 °C.

9. The manufacturing method as claimed in claim 7, wherein in the step (3), controlling a final rolling or final forging temperature to be 860-980 °C.

10. The manufacturing method as claimed in claim 7, wherein in the step (4), heating to 750-770 °C and keeping for 4h or above, then cooling with a cooling rate of 5-15 °C/h to 700-720 °C and keeping for 3.5h or above, cooling with a cooling rate of 3-12 °C/h to 660-680 °C and keeping for 3.5h or above, and cooling with a cooling rate of 5-20 °C/h to 500 °C or below, and then tapping and cooling.
